# EUROPÄISCHE PATENTSCHRIFT

(11) **EP 2 080 459 B1**
(45) Veröffentlichungstag und Bekanntmachung des Hinweises auf die Patenterteilung: **14.03.2012**
(21) Anmeldenummer: 09100022.4
(22) Anmeldetag: 08.01.2009
(51) Int. Cl.: A47J 31/46

(54) **Kaffeevollautomat mit horizontal bewegbarem Brühgetränkeauslass**
Fully automatic coffee machine with horizontally mobile brewed drink outlet
Machine à café totalement automatique dotée d'une ouverture de boisson chaude mobile horizontalement

(30) Priorität: 15.01.2008 DE 102008004462
(43) Veröffentlichungstag der Anmeldung: 22.07.2009
(73) Patentinhaber: BSH Bosch und Siemens Hausgeräte GmbH, 81739 München (DE)
(72) Erfinder: Jäger, Harald, 83349, Palling (DE)

(56) Entgegenhaltungen:
- WO-A-02/21983
- WO-A-98/56285

## Beschreibung

Die Erfindung betrifft einen Kaffeevollautomaten mit mehreren Zubereitungsfunktionen, der ein Gehäuse und einen Brühgetränkeauslass umfasst, der an einer dem Benutzer zugewandten Frontseite des Gehäuses bewegbar angeordnet ist.

In der WO 02/21 983 A1 ist eine Ausgussanordnung für eine Brühgetränkemaschine zur Zubereitung unterschiedlicher Getränke auf der Basis von Kaffee und/oder Milch beschrieben, wobei Kaffee, Milch und Wasserdampf über getrennte Zuführungsleitungen je einem Ausgusselement zugeführt werden. Die Ausgusselemente sind auf Tragarmen angeordnet, die als Teil eines Halters mit einer zentralen Steuerscheibe radial nach außen abragen. Hierbei liegt eine freie Stirnfläche der Steuerscheibe an der Stirnfläche einer feststehenden Einlaufscheibe an, und die Steuerscheibe und die Einlaufscheibe sind um ihre gemeinsame Scheibenachse leitend gegeneinander verschiebbar. Die Steuerscheibe und die Einlaufscheibe sind von Kanälen mit zwei Öffnungen durchsetzt, deren erste Öffnungen auf den einander gegenüber stehenden Stirnflächen der Steuerscheibe und der Einlaufscheibe angeordnet sind und deren zweite Öffnungen außerhalb der Stirnflächen liegen. Die zweite Öffnung jedes Kanals in der Steuerscheibe steht über eine rohrförmige Leitung mit wenigstens je einem Ausgusselement in Verbindung, und die zweite Öffnung jedes Kanals in der Einlaufscheibe ist mit je einer der Zuführungsleitungen für Kaffee, Milch und Wasserdampf verbunden. Zur Auswahl eines Getränks ist die Steuerscheibe zu verdrehen, sodass die erforderlichen Auslässe für Kaffee, Milch und/oder Wasserdampf in ein Getränkegefäß vertikal nach unten gerichtet sind. Für jedes Getränk ist also eine separate Anordnung von Auslässen erforderlich, die bei der Zubereitung eines anderen Getränks unter Umständen nicht benötigt werden. Die vorgeschlagene Konstruktion ist also sehr aufwändig.

Ausgehend von der Vorrichtung der eingangs genannten Art ist es Aufgabe der Erfindung, einen Kaffeevollautomaten bereitzustellen, bei dem die erforderlichen Auslässe für die Getränkezutaten mit möglichst geringem technischen Aufwand zeitgleich in einen Getränkebehälter gerichtet werden können und trotzdem Bedienungsfehler durch einen Benutzer weitgehend auszuschließen sind.

Diese Aufgabe wird bei dem eingangs genannten Kaffeevollautomaten gelöst durch eine horizontale Bewegbarkeit des Brühgetränkeauslasses zwischen mindestens zwei Betriebspositionen und durch eine Erkennungsvorrichtung zur Erkennung der Betriebspositionen des Brühgetränkeauslasses sowie mindestens einer dazwischen liegenden Nicht-Betriebsposition. Die Erfindung verfolgt also das Prinzip, den Brühgetränkeauslass horizontal bewegbar zu gestalten, um ihm für die Zubereitung unterschiedlicher Getränke unterschiedliche Betriebspositionen zuzuweisen. Um dabei Bedienungsfehler durch einen Benutzer möglichst auszuschließen, ist eine Erkennung von Betriebspositionen und Nicht-Betriebspositionen vorgesehen. Dies schließt zwar die Bewegungsmöglichkeiten eines separaten Dampfauslasses nicht generell aus, macht ihn aber nicht zwingend erforderlich, eventuell sogar überflüssig. Die Bewegung des Brühgetränkeauslasses ist technisch einfacher, da an ihm kein Druck anliegt wie an den bekannten Dampfauslässen und auch kein weiterer Anschluss mitverschwenkt werden muss, wie bei Milchschaumdüsen mit einer Milchansaugung aus einem separaten Milchvorratsbehälter.

Der horizontal bewegbare Brühgetränkeauslass reduziert insgesamt den technischen Aufwand für die Brühgetränkemaschine bei gleich bleibendem oder gar höherem Bedienungskomfort. "Horizontal bewegbar" bedeutet dabei, dass sowohl eine erste Betriebsposition des Brühgetränkeauslasses als auch eine zweite Betriebsposition des Brühgetränkeauslasses nach Abschluss der Bewegung mindestens näherungsweise auf der selben horizontalen Ebene liegen. Die erfindungsgemäße Konstruktion ermöglicht also unter anderem eine Betriebsposition, in der der Brühgetränkeauslass und der Dampf- bzw. Milchschaumauslass in unmittelbarer Nähe zueinander angeordnet sind, so dass sie in dieselbe Tasse gerichtet sind. Dabei wird durch die Erkennungsvorrichtung registriert, ob sich der Brühgetränkeauslass in einer Betriebsposition befindet und ggf. in welcher der möglichen.

Grundsätzlich sind verschiedene Bewegungsvorgänge des Brühgetränkeauslasses denkbar. Nach einer ersten vorteilhaften Ausgestaltung der Erfindung ist der Auslass horizontal verschiebbar. Diese Bewegungsmöglichkeit ist für den Bediener leicht nachzuvollziehen und daher quasi intuitiv bedienbar. Der Getränkeauslass kann dafür z.B. auf einer horizontal verlaufenden Schiene verschiebbar sein. Das Brühgetränk kann dafür in einem flexiblen Schlauch dem Auslass zugeführt werden, der die horizontale Verschiebung mit vollzieht. Diese Konstruktion erfordert den geringsten Platzbedarf für die Bewegung des Getränkeauslasses. Alternativ dazu kann der Auslass auch an den Gelenken eines Parallellenkers montiert sein. Auch hier kann das Brühgetränk in einem flexiblen Schlauch oder in einer schwenkbaren festen Rohrleitung zum Getränkeauslass geführt werden.

Nach einer alternativen Ausgestaltung der Erfindung kann der Auslass um eine horizontale Achse um etwa 180 Grad verdrehbar angeordnet sein. Diese Konstruktionsmöglichkeit erlaubt sinnvollerweise nur zwei Betriebspositionen, nämlich eine, in der der Brühgetränkeauslass entfernt von und eine weitere, in der der Brühgetränkeauslass in unmittelbarer Nähe des Dampf- bzw. Milchschaumauslasses positioniert ist. Allerdings ist für die beiden Betriebszustände jeweils wenigstens eine separate Brühgetränkeauslassöffnung erforderlich. Es kann also nicht dieselbe Brühgetränkeauslassöffnung für beide Betriebszustände verwendet werden. Die Brühgetränkezufuhr zum Auslass ist über starre verdrehbare Leitungen möglich. Das Getränk findet der Schwerkraft folgend jeweils die richtige Auslassöffnung. Gegebenenfalls kann durch ein Kugelventil verhindert werden, dass in der einen Betriebsposition Dampf oder Getränk durch die Auslassöffnung der anderen Betriebsposition nach oben entweicht.

Nach einer weiteren alternativen Ausgestaltung der Erfindung ist der Brühgetränkeauslass um eine vertikale Achse schwenkbar. Der Auslass kann also zwischen den Betriebspositionen hin- und hergeklappt werden. Auch für diese Variante sind starre verdrehbare Leitungen oder flexible Schläuche für das Brühgetränk möglich. Diese Variante dürfte den technisch geringsten Aufwand erfordern.

Gemäß einer besonders bevorzugten Ausführungsform weist der erfindungsgemäße Kaffeevollautomat eine Aktivierung einer Zubereitungsfunktion ausschließlich bei Erkennung der Stellung des Brühgetränkeauslasses in einer definierten Betriebsposition auf. Die jeweilige Zubereitungsfunktion steht mit der definierten Betriebsposition in einem funktionalen Sinnzusammenhang. Eine Zubereitungsfunktion ist beispielsweise die Cappuccinobereitung aus Espressokaffee und geschäumter Milch. Diese Zubereitungsfunktion wird nur bei einer Betriebsposition des Brühgetränkeauslasses ermöglicht, in der aus dem Brühgetränkeauslass Kaffee in ein unter einer Milchschaumdüse befindliches Gefäß abgefüllt werden kann. Milchschaum und Kaffee können simultan zubereitet und in das Gefäß eingefüllt werden. Dadurch kann eine Bedienertätigkeit zum Beispiel für das Umstellen des Gefäßes und jedenfalls Zubereitungszeit eingespart werden. In einer anderen Betriebsposition des Brühgetränkeauslasses dagegen wird die Zubereitung von Cappuccino unterbunden und ggf. eine Fehlermeldung ausgegeben.

Nach einer vorteilhaften Weiterbildung ist mindestens eine Zubereitungsfunktion bei Erkennung der Stellung des Brühgetränkeauslasses in einer Nicht-Betriebsposition blockiert. Dies kann zum Beispiel durch mechanische Blockademechanismen oder steuerungstechnische Blockadelogiken erfolgen. Wird eine Zubereitungsfunktion ausschließlich bei Erkennung der Stellung des Brühgetränkeauslasses in einer definierten Betriebsposition aktiviert, so kann der Benutzer die Getränkezubereitung nicht versehentlich in einer Nicht-Betriebsposition durchführen. Dadurch kann der Benutzer sicher sein, dass er nur in einer Betriebsposition des Brühgetränkeauslasses ein bestimmtes Getränk zubereiten kann und es bei Fehlstellungen nicht zu Betriebsfehlern kommt.

Gemäß einer vorteilhaften Ausführungsform der Erfindung weist der Brühgetränkeauslass bei Erkennung der Stellung des Brühgetränkeauslasses in einer Nicht-Betriebsposition eine Blockade auf. Sie kann beispielsweise durch eine Durchlaufsperre in Form eines Ventils erfolgen, die mechanisch mit dem Brühgetränkeauslass gekoppelt und durch seine Bewegung geschaltet wird. Sie kann auch in Zuleitungen zum Brühgetränkeauslass angeordnet sein. In einer vorteilhaften Weiterbildung dieser Ausführungsform weist der Brühgetränkeauslass eine Aktivierung ausschließlich bei Erkennung seiner Stellung in einer definierten Betriebsposition auf. Die Blockade des Brühgetränkeauslasses wird ausschließlich dann aufgehoben, wenn er sich in einer definierten Betriebsposition befindet.

Analog zur Blockade bzw. Aktivierung des Brühgetränkeauslasses kann als Blockadelogik in einer weiteren vorteilhaften Ausführungsform bei Erkennung der Stellung des Brühgetränkeauslasses in einer Nicht-Betriebsposition eine Abschaltung eines Betriebes einer Flüssigkeitspumpe vorgesehen sein. Zusätzlich kann eine Aktivierung einer Flüssigkeitspumpe ausschließlich bei Erkennung der Stellung des Brühgetränkeauslasses in einer definierten Betriebsposition erfolgen. Hierdurch kann beispielsweise vermieden werden, dass die Flüssigkeitspumpe Brühwasser weiter in das System des Kaffeevollautomaten pumpt, obwohl der Brühgetränkeauslasses wegen seiner Stellung in einer Nicht-Betriebsposition blockiert ist. Dadurch wird ein unnötiger und gefährlicher Druckaufbau innerhalb des Leitungssystems des Kaffeevollautomaten vermieden.

Außerdem ist es vorteilhafterweise vorgesehen, unterschiedliche Zubereitungsfunktionen in unterschiedlichen Betriebspositionen des Brühgetränkeauslasses zuzulassen bzw. zu blockieren. Hierdurch erfolgt eine funktionale Zuordnung von Zubereitungsfunktionen zu bestimmten Betriebspositionen des Brühgetränkeauslasses. Beispielsweise kann die Zubereitungsfunktion "Abgabe von Milchschaum über eine Milchschaumdüse" nur dann zugelassen werden, wenn sich der Brühgetränkeauslass in einer Betriebsposition in unmittelbarer Nähe der Milchschaumdüse befindet. Dadurch wird vermieden, dass sich der Brühgetränkeauslass bei der Zubereitung von Cappuccino in einer Betriebsposition befindet, in der Milchschaum nicht direkt in ein unter dem Brühgetränkeauslass befindliches Gefäß abgegeben werden kann.

Bevorzugterweise weist der Kaffeevollautomat Schalter am Gehäuse oder am Brühgetränkeauslass auf, die der Brühgetränkeauslass jeweils in einer seiner Betriebspositionen schaltet. Die Schalter dienen im Rahmen der Erkennungsvorrichtung zum Signalisieren der Betriebsposition, die der Brühgetränkeauslass beim Schalten des Schalters eingenommen hat. Ein Schalter kann automatisch geschaltet werden, wenn er am Berührpunkt zwischen Auslass und Gehäuse platziert ist, nämlich entweder durch den Brühgetränkeauslass, wenn er am Gehäuse anschlägt, oder durch das Gehäuse, mit dem der Brühgetränkeauslass Kontakt bekommt. Ein Verlassen des Brühgetränkeauslasses der Betriebsposition bewirkt ein Lösen der Schalterkontakte, wodurch, wie oben beschrieben, beispielsweise eine Blockade des Brühgetränkeauslasses und/oder der Flüssigkeitspumpe erfolgen kann. Die Verwendung von Schaltern am Gehäuse bzw. am Brühgetränkeauslass bewirkt eine einfache und fehlerunanfällige automatische Erkennung des Brühgetränkeauslasses in einer Betriebsposition. Weiterhin kann davon ausgegangen werden, dass der Brühgetränkeauslass eine Nicht-Betriebsposition einnimmt, wenn keiner der Schalter betätigt ist.

In einer weiteren bevorzugten Ausführungsform ist eine mechanische Kopplung des Brühgetränkeauslasses mit einem Schalter als Element der Erkennungsvorrichtung vorgesehen. Sie setzt eine Betätigungskraft zur Änderung der Stellung des Brühgetränkeauslasses in eine Signalisierungskraft zur Betätigung eines Schalters um. Durch die Bewegung des Brühgetränkeauslasses kann also durch eine Kopplung ein Schalter betätigt werden. Beispielsweise kann es sich bei dem Schalter selbst um einen mechanisch betätigbaren Schalter handeln, der auf der Frontseite des Kaffeevollautomaten angebracht ist und durch Anschlagen des Brühgetränkeauslasses an der Frontseite automatisch betätigt wird. Eine mechanische Kopplung kann jedoch auch von außen unsichtbar im Inneren des Automaten, beispielsweise durch Bowdenzüge oder Schubstangen erfolgen.

Gemäß einer besonders bevorzugten Weiterbildung wird die mechanische Kopplung durch einen Mitnehmer bewirkt, der mit der horizontalen Bewegung des Brühgetränkeauslasses durch Kopplungselemente gekoppelt ist und der die Bewegung des Brühgetränkeauslasses zwischen den Betriebspositionen mindestens teilweise mit vollzieht. Ein derartiger Mitnehmer muss also nicht die komplette Bewegungsstrecke des Brühgetränkeauslasses mitbewegt werden, wird jedoch auf jeden Fall dann aktiviert, wenn der Brühgetränkeauslass in eine Betriebsposition hineinbewegt wird bzw. deaktiviert, wenn er aus einer Betriebsposition in eine Nicht-Betriebsposition überführt wird. Der Mitnehmer dient dazu, einen Erkennungsschalter zu aktivieren, der das Erreichen der Betriebsposition durch den Brühgetränkeauslass erkennt. Der Mitnehmer bietet den Vorteil einer einfachen mechanischen Konstruktion und dass er die Bewegung des Brühgetränkeauslasses durch eigene Bewegung repräsentiert. Die Detektion seiner Bewegung ist im Allgemeinen fehlerärmer durchführbar, als wenn lediglich das Erreichen der Endposition detektiert würde.

Besonders bevorzugt weist ein Kaffeevollautomat eine Erkennungsvorrichtung mit einem federbasierten Schalter auf. Der Schalter ist in einer seiner beiden Schaltstellungen nur gegen die Federkraft bedienbar. Die Feder kann Kontaktelemente des Schalters automatisch wegdrücken, wenn der Brühgetränkeauslass die Betriebsposition verlässt. Somit ist auf sehr einfache Art und Weise detektierbar, wann sich der Brühgetränkeauslass in einer Nicht-Betriebsposition befindet.

Gemäß einer alternativen Ausführungsform weist der Kaffeevollautomat eine sensorische Erkennung der Position des Brühgetränkeauslasses auf. Die sensorische Erkennung kann beispielsweise mit Hilfe von kapazitiven und/oder induktiven, optischen Sensoren, Funksensoren oder Sensorsystemen mit der Erfassung elektromagnetischer Wellen erfolgen. Ein wesentlicher Vorteil derartiger Sensoren ist neben der versteckten Anbringung, dass die Erkennungssignale berührungslos erfolgen, direkt in elektrische Impulse umgewandelt werden und damit der Umweg über mechanische Aktivierung von Schaltern wegfällt.

Im Allgemeinen ist es im Rahmen der Erfindung besonders bevorzugt, dass die Erkennungsvorrichtung elektrische und/oder elektronische Elemente im Innenbereich des Kaffeevollautomaten umfasst. Eine Anbringung im Innenbereich bewirkt, dass diese Elemente vor äußeren Einflüssen wie Spritzwasser und Verschmutzungen geschützt sind und dadurch in ihrer Funktion besser erhalten bleiben. Außerdem beeinflusst die Erkennungsvorrichtung den ästhetischen Gesamteindruck des Kaffeevollautomaten nicht.

Gemäß einer weiteren bevorzugten Ausführungsform weist ein erfindungsgemäßer Kaffeevollautomat eine optische und/oder eine akustische Signalisierung auf, sobald der Brühgetränkeauslass eine Betriebsposition erreicht hat und/oder verlässt. Dies kann beispielsweise optisch mit Hilfe von Lampen oder Displaybeleuchtungen bzw. Displayanzeigen erfolgen, unter anderem durch unterschiedliche Farbgebung der Lampe oder des Displays, oder durch Warntöne oder Melodien. Damit korrespondiert die Erkennung der Betriebsposition bzw. der Nicht-Betriebsposition des Brühgetränkeauslasses mit Signalen an einen Benutzer. Auch ohne Kopplung der Erkennungsvorrichtung an die Aktivierung bzw. Blockade von Funktionen kann somit bereits ein hoher Sicherheitsstandard für Kaffeevollautomaten gewährleistet werden.

Das Prinzip der Erfindung wird im Folgenden anhand von Figuren beispielshalber noch näher erläutert. Es zeigen:
- Figur 1: eine räumliche Ansicht eines erfindungsgemäßen Kaffeevollautomaten,
- Figur 2: eine Detailansicht eines Brühgetränkeauslasses mit Erkennungsvorrichtung,
- Figur 3: eine Draufsicht auf den Brühgetränkeauslass aus Figur 2 in einer Nicht- Betriebsposition,
- Figur 4: eine Draufsicht auf den Brühgetränkeauslass in einer ersten Betriebsposition,
- Figur 5: eine Draufsicht auf den Brühgetränkeauslass in einer zweiten Betriebsposition.

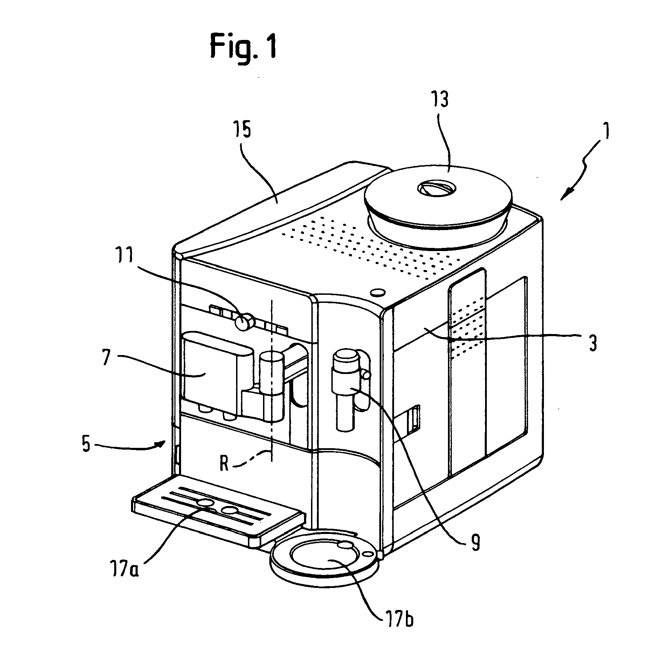

Figur 1 zeigt einen erfindungsgemäßen Kaffeevollautomaten 1, dessen Gehäuse 3 eine Frontseite 5, einen oberseitig eingebetteten Bohnenbehälter 13, ein seitlich danebenliegendes Wasserreservoir 15 sowie ein Bedienelement 11 umfasst. In der Frontseite 5 sind eine Milchschaumdüse 9 und ein Brühgetränkeauslass 7 angebracht. Der Brühgetränkeauslass 7 und die Milchschaumdüse 9 befinden sich oberhalb von Abstellflächen 17a, 17b, auf denen im Betrieb Getränkebehälter wie Kaffeetassen oder Latte-Macchiato-Gläser platziert werden. Der Brühgetränkeauslass 7 ist entlang einer Rotationsachse R, die parallel zur vertikalen Ausrichtung der Frontseite 5 des Gehäuses 3 liegt, schwenkbar von einer Position angeordnet. Er kann aus einer Position oberhalb der Abstellfläche 17a in eine Position oberhalb der Abstellfläche 17b geschwenkt werden, die etwas niedriger angebracht ist als die Abstellfläche 17a. In einer ersten Betriebsposition, in der sich der Brühgetränkeauslass 7 oberhalb der Abstellfläche 17a befindet, gibt der Brühgetränkeauslass 7 solche Kaffeegetränke aus, die nicht durch Zutaten aus der Kaffeemaschine veredelt werden, beispielsweise Filterkaffee. Durch das horizontale Schwenken des Brühgetränkeauslasses 7 über Abstellfläche 17b wird der Brühgetränkeauslass 7 in eine Betriebsposition angrenzend an die Milchschaumdüse 9 bewegt. In der zweiten Betriebsposition des Auslasses 7 in der Nähe der Milchschaumdüse 9 werden solche Kaffeegetränke ausgegeben, die eine Zutatenkomposition von Kaffee mit Milchschaum vorsehen. Denn wegen der niedriger gelegenen Abstellfläche 17b kann insbesondere ein relativ hohes Latte-Macchiato-Glas unterhalb der Milchschaumdüse 9 abgestellt werden und durch den Brühgetränkeauslass 7 Kaffee sowie durch die Milchschaumdüse 9 Milchschaum simultan oder aufeinander folgend in das Latte-Macchiato-Glas abgegeben werden. Dabei kann der Kaffeevollautomat 1 gemäß vordefinierter Programme verschiedene Kaffeezubereitungsarten anbieten.

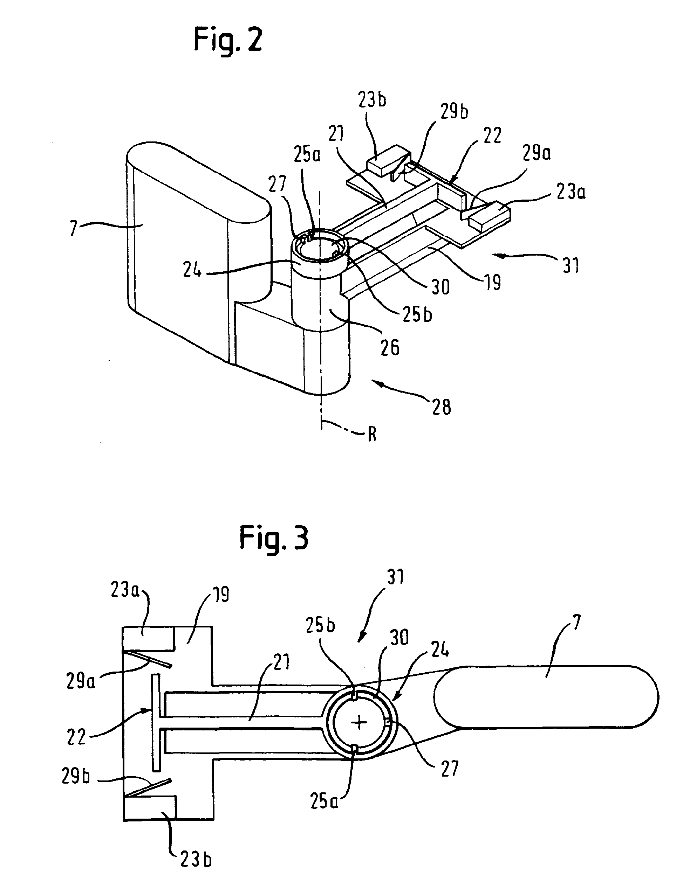

In Figur 2 ist eine Detailansicht eines erfindungsgemäßen Brühgetränkeauslasses 7 mit einer Erkennungsvorrichtung 31 dargestellt. Ein Träger 19 verbindet den Brühgetränkeauslasses 7 mit dem Gehäuse 3, und ist oberseitig geöffnet dargestellt. Dadurch sind die einzelnen Elemente der Erkennungsvorrichtung 31 erkennbar. Der Träger 19 weist der auf seiner Oberseite zwei Schalter 23a, 23b mit zwei daran angebrachten Federn 29a, 29b auf. Auf dem Träger 19 liegt ein T-förmiger Mitnehmer 21, der auf seiner dem T-förmigen Endstück 22 entgegen gesetzten Endbereich 24 eine innen offene Rundung mit Zähnen 25a, 25b auf der Innenseite aufweist. Der Mitnehmer 21 ist Teil eines Gelenkes 28. Es besteht aus dem Träger 19, der an seiner der Frontseite 5 abgewandten Endseite ebenfalls eine Abschlussrundung 26 aufweist, dem Endbereich des Brühgetränkeauslasses 7 und dem gerundeten Endbereich 24 des Mitnehmers 21 besteht. Außerdem ist der Brühgetränkeauslass 7 im Gelenk 28 entlang eines zylinderartigen Abschlusses 30 in die Abschlussrundung 26 des Trägers 19 eingeschoben und weist am oberen Ende des Abschlusses 30 eine Raste 27 auf. Die Raste 27 bewegt die Zähne 25a, 25b während einer Drehbewegung des Brühgetränkeauslasses 7 um die Rotationsachse R des Gelenks 28 in einem begrenzten Bereich mit und bewegt somit das T-förmige Endstück 22 des Mitnehmers 21 in Richtung eines der Schalter 23a, 23b und überwindet dabei den Widerstand der Federn 29a, 29b .

Diese Bewegungskopplung des Brühgetränkeauslasses 7 mit dem Mitnehmer 21 wird in den Figuren 3 bis 5 näher beschrieben.

In Figur 3 ist der Brühgetränkeauslass 7 gemeinsam mit der Erkennungsvorrichtung 31 in einer Schnittansicht von oben erkennbar. Der Brühgetränkeauslass 7 befindet sich in einer Nicht-Betriebsposition. Er steht in etwa senkrecht zur Frontseite 5 des Gehäuses 3 und steht zumindest teilweise über die Abstellflächen 17a, 17b hinaus. Die Raste 27 steht genau zwischen den Zähnen 25a, 25b des Mitnehmers 21 und ist mit ihnen nicht in Kontakt. Der Mitnehmer 21 wird daher nicht von einer Kraft, die der Brühgetränkeauslass 7 mittels der Raste auf die Zähne 25a, 25b ausübt, in einer Betriebsposition gehalten, in der einer der Schalter 23a,23b berührt würde. Vielmehr steht das Endstück 22 des T-förmigen Mitnehmers 21 in einer parallelen Position zur Frontseite 5 des Gehäuses 3.

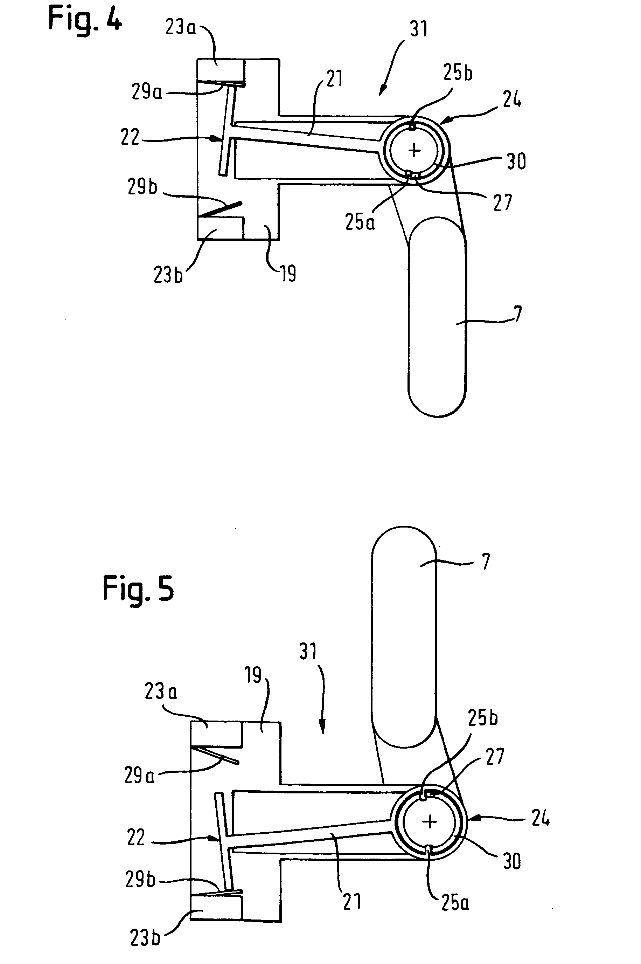

In Figur 4 ist der Brühgetränkeauslass 7 in einer ersten Betriebsposition zu sehen. Er ist in etwa parallel zur Frontseite 5 des Gehäuses 3 angeordnet. Mit Hilfe der Raste 27 wurde nun der Mitnehmer 21 über den Zahn 25a so bewegt, dass die eine Seite des Endstücks 22 des T-förmigen Mitnehmers 21 in Richtung des ersten Schalters 23a gedrückt wird, wodurch die Feder 29a eingedrückt wird. Der Schalter 23a ist betätigt und signalisiert dadurch, dass sich der Brühgetränkeauslass 7 in der ersten Betriebsposition befindet.

Analog hierzu ist in Figur 5 der Brühgetränkeauslass 7 in einer zweiten Betriebsposition dargestellt. Die Raste 27 übt eine Kraft über den Zahn 25b auf den Mitnehmer 21 aus, die das andere Ende des Endstücks 22 des T-förmigen Mitnehmers 21 auf den zweiten Schalter 23b drückt und dabei die Feder 29b eindrückt. Analog zur in Figur 4 dargestellten ersten Betriebsposition wird in dieser zweiten Betriebsposition ein Signal des zweiten Schalters 23b generiert, das den Brühgetränkeauslass 7 in der zweiten Betriebsposition anzeigt.

Da es sich bei den vorhergehenden, detailliert beschriebenen Figuren um Ausführungsbeispiele handelt, können sie in üblicher Weise vom Fachmann in einem weiten Umfang modifiziert werden, ohne den Bereich der Erfindung zu verlassen. Insbesondere können auch die konkreten Ausgestaltungen des Brühgetränkeauslaufs in anderer Form als in der hier beschriebenen erfolgen. Ebenso kann der Kaffeevollautomat in einer anderen Form ausgestaltet werden, wenn dies aus Platzgründen bzw. designerischen Gründen notwendig ist. Weiterhin schließt die Verwendung der unbestimmten Artikel "ein" bzw. "eine" nicht aus, dass die betreffenden Merkmale auch mehrfach vorhanden sein können.

### Bezugszeichenliste

- 1: Kaffeevollautomat
- 3: Gehäuse
- 5: Frontseite
- 7: Brühgetränkeauslass
- 9: Milchschaumdüse
- 11: Bedienelemente
- 13: Bohnenbehälter
- 15: Wasserreservoir
- 17a, 17b: Abstellflächen
- 19: Träger
- 21: Mitnehmer
- 22: Endstück
- 23a, 23b: Schalter
- 24: Endbereich
- 25a, 25b: Zähne
- 26: Abschluβrundung
- 27: Raste
- 28: Gelenk
- 29a, 29b: Federn
- 30: Abschluss
- 31: Erkennungsvorrichtung

- R: Rotationsachse

## Patentansprüche

1. Kaffeevollautomat (1) mit mehreren Zubereitungsfunktionen, der ein Gehäuse (3) und einen an einer benutzerzugewandten Frontseite (5) des Gehäuses (3) angeordneten bewegbaren Brühgetränkeauslass (7) umfasst, **gekennzeichnet durch** eine horizontale Bewegbarkeit des Brühgetränkeauslasses (7) zwischen mindestens zwei Betriebspositionen und **durch** eine Erkennungsvorrichtung (31) zur Erkennung der Betriebspositionen des Brühgetränkeauslasses (7) sowie mindestens einer dazwischen liegenden Nicht-Betriebsposition.

2. Kaffeevollautomat gemäß Anspruch 1, **gekennzeichnet durch** eine Aktivierung einer Zubereitungsfunktion ausschließlich bei Erkennung der Stellung des Brühgetränkeauslasses (7) in einer definierten Betriebsposition.

3. Kaffeevollautomat gemäß Anspruch 1 oder 2, **gekennzeichnet durch** eine Blockade des Brühgetränkeauslasses (7) bei Erkennung der Stellung des Brühgetränkeauslasses (7) in einer Nicht-Betriebsposition.

4. Kaffeevollautomat gemäß einem der vorhergehenden Ansprüche, **gekennzeichnet durch** einer Abschaltung eines Betriebs einer Flüssigkeitspumpe bei Erkennung der Stellung des Brühgetränkeauslasses (7) in einer Nicht-Betriebsposition.

5. Kaffeevollautomat gemäß einem der vorhergehenden Ansprüche, **gekennzeichnet durch** einen Schalter (23a, 23b) am Gehäuse (3) oder am Brühgetränkeauslass (7), der (7) in einer Betriebsposition des Brühgetränkeauslasses geschaltet ist.

6. Kaffeevollautomat gemäß einem der vorhergehenden Ansprüche, **gekennzeichnet durch** eine mechanische Kopplung (21) des Brühgetränkeauslasses (7) mit einem Schalter (23a, 23b) als Element der Erkennungsvorrichtung (31), die eine Betätigungskraft zur Änderung der Stellung des Brühgetränkeauslasses (7) in eine Signalisierungskraft zur Betätigung des Schalters (23a, 23b) umsetzt.

7. Kaffeevollautomat gemäß Anspruch 6, **gekennzeichnet durch** einen mit der horizontalen Bewegung des Brühgetränkeauslasses (7) **durch** Kupplungselemente (25a, 25b, 27) gekoppelten Mitnehmer (21), der die Bewegung des Brühgetränkeauslasses (7) zwischen den Betriebspositionen mindestens teilweise mit vollzieht.

8. Kaffeevollautomat gemäß einem der Ansprüche 5 bis 7, **dadurch gekennzeichnet, dass** die Erkennungsvorrichtung (31) einen mit einer Federung (29a, 29b) versehenen Schalter (23a, 23b) umfasst.

9. Kaffeevollautomat gemäß einem der vorhergehenden Ansprüche, **gekennzeichnet durch** eine sensorische Erkennung der Position des Brühgetränkeauslasses (7).

10. Kaffeevollautomat gemäß einem der vorhergehenden Ansprüche, **gekennzeichnet durch** eine optische und/oder akustische Signalisierung, sobald der Brühgetränkeauslass (7) eine Betriebsposition erreicht hat und/oder verlässt.

## Claims

1. Automatic coffee machine (1) with a plurality of preparation functions, which comprises a housing (3) and a movable brewed beverage outlet (7) arranged at a front side (5) of the housing (3) facing the user, **characterised by** a horizontal mobility of the brewed beverage outlet (7) between at least two operating positions and by a recognition device (31) for recognising the operating positions of the brewed beverage outlet (7) as well as at least one non-operating position disposed therebetween.

2. Automatic coffee machine according to claim 1, **characterised by** activation of a preparation function exclusively on recognition of the setting of the brewed beverage outlet (7) in a defined operating position.

3. Automatic coffee machine according to claim 1 or 2, **characterised by** a blocking of the brewed beverage outlet (7) on recognition of the setting of the brewed beverage outlet (7) in a non-operating position.

4. Automatic coffee machine according to any one of the preceding claims, **characterised by** switching-off of an operation of a liquid pump on recognition of the setting of the brewed beverage outlet (7) in a non-operating position.

5. Automatic coffee machine according to any one of the preceding claims, **characterised by** a switch (23a, 23b) at the housing (3) or at the brewed beverage outlet (7), which outlet (7) is switched in an operating position of the brewed beverage outlet.

6. Automatic coffee machine according to any one of the preceding claims, **characterised by** a mechanical coupling (21) of the brewed beverage outlet (7) with a switch (23a, 23b) as an element of the recognition device (31), which converts an actuation force for change of the setting of the brewed beverage outlet (7) into a signalling force for actuation of the switch (23a, 23b).

7. Automatic coffee machine according to claim 6, **characterised by** an entrainer (21) which is coupled by coupling elements (25a, 25b, 27) with the horizontal movement of the brewed beverage outlet (7) and which at least partly executes the movement of the brewed beverage outlet (7) between the operating positions.

8. Automatic coffee machine according to any one of claims 5 to 7, **characterised in that** the recognition device (31) comprises a switch (23a, 23b) provided with resilient means (29a, 29b).

9. Automatic coffee machine according to any one of the preceding claims, **characterised by** a sensor-based recognition of the position of brewed beverage outlet (7).

10. Automatic coffee machine according to any one of the preceding claims, **characterised by** an optical and/or acoustic signalling as soon as the brewed beverage outlet (7) has reached and/or left an operating position.

## Revendications

1. Machine à café automatique (1) comprenant plusieurs fonctions de préparation, laquelle comprend un boîtier (3) et une sortie mobile de boisson infusée (7) disposée sur un côté frontal (5), tourné vers l'utilisateur, du boîtier (3), **caractérisée par** une mobilité horizontale de la sortie de boisson infusée (7) entre au moins deux positions de fonctionnement et par un dispositif de reconnaissance (31) destiné à reconnaître les positions de fonctionnement de la sortie de boisson infusée (7) ainsi qu'au moins une position intermédiaire de non-fonctionnement.

2. Machine à café automatique selon la revendication 1, **caractérisée par** une activation d'une fonction de préparation exclusivement lors de la reconnaissance de la position de la sortie de boisson infusée (7) dans une position de fonctionnement définie.

3. Machine à café automatique selon la revendication 1 ou 2, **caractérisée par** un blocage de la sortie de boisson infusée (7) lors de la reconnaissance de la position de la sortie de boisson infusée (7) dans une position de non-fonctionnement.

4. Machine à café automatique selon l'une quelconque des revendications précédentes, **caractérisée par** un arrêt d'un fonctionnement d'une pompe de liquide lors de la reconnaissance de la position de la sortie de boisson infusée (7) dans une position de non-fonctionnement.

5. Machine à café automatique selon l'une quelconque des revendications précédentes, **caractérisée par** un commutateur (23a, 23b) sur le boîtier (3) ou sur la sortie de boisson infusée (7), lequel commutateur est commuté dans une position de fonctionnement de la sortie de boisson infusée.

6. Machine à café automatique selon l'une quelconque des revendications précédentes, **caractérisée par** un couplage mécanique (21) de la sortie de boisson infusée (7) à un commutateur (23a, 23b) en tant qu'élément du dispositif de reconnaissance (31), lequel couplage convertit une force d'actionnement destinée à modifier la position de la sortie de boisson infusée (7) en une force de signalisation destinée à actionner le commutateur (23a, 23b).

7. Machine à café automatique selon la revendication 6, **caractérisée par** un entraîneur (21) couplé au mouvement horizontal de la sortie de boisson infusée (7) au moyen d'éléments de couplage (25a, 25b, 27), lequel entraîneur exécute au moins en partie le mouvement de la sortie de boisson infusée (7) entre les positions de fonctionnement.

8. Machine à café automatique selon l'une quelconque des revendications 5 à 7, **caractérisée en ce que** le dispositif de reconnaissance (31) comprend un commutateur (23a, 23b) muni d'un système à ressorts (29a, 29b).

9. Machine à café automatique selon l'une quelconque des revendications précédentes, **caractérisée par** une reconnaissance sensorielle de la position de la sortie de boisson infusée (7).

10. Machine à café automatique selon l'une quelconque des revendications précédentes, **caractérisée par** une signalisation optique et/ou acoustique dès que la sortie de boisson infusée (7) a atteint et/ou quitté une position de fonctionnement.
